# EUROPÄISCHE PATENTSCHRIFT

(11) **EP 1 681 520 B1**
(45) Veröffentlichungstag und Bekanntmachung des Hinweises auf die Patenterteilung: **03.09.2014**
(21) Anmeldenummer: 05014511.9
(22) Anmeldetag: 05.07.2005
(51) Int. Cl.: F24H 9/12, F24D 3/10, E03B 7/07, F16K 5/06, F16K 47/02, F16K 47/04

(54) **Rohrtrenneranordnung**
Backflow prevention assembly
Ensemble de disconnection

(30) Priorität: 29.12.2004 DE 102004063747; 02.03.2005 DE 102005010139
(43) Veröffentlichungstag der Anmeldung: 19.07.2006
(73) Patentinhaber: HANS SASSERATH & CO KG, 41352 Korschenbroich (DE)
(72) Erfinder: Hecking, Willi, 41352 Korschenbroich (DE)
(74) Vertreter: Weisse, Renate

(56) Entgegenhaltungen:
- EP-A- 0 905 454
- EP-A- 0 972 995
- EP-A- 1 229 291
- EP-A- 1 350 896
- DE-A1- 10 308 838
- DE-A1- 10 312 527
- FR-A- 2 800 401
- US-A- 5 372 158
- US-A- 5 799 695
- US-A- 5 992 823
- US-A1- 2003 089 403
- US-B1- 6 513 543
- PATENT ABSTRACTS OF JAPAN Bd. 012, Nr. 212 (M-710), 17. Juni 1988 (1988-06-17) & JP 63 013980 A (ATSURO MURAI), 21. Januar 1988 (1988-01-21)

## Beschreibung

### Technisches Gebiet

Die Erfindung betrifft eine Rohrtrenneranordnung zum Einbau in eine Flüssigkeitsleitung enthaltend einen Flüssigkeitseinlass, der mittels ersten Absperrmitteln absperrbar ist, einen Flüssigkeitsauslass, der mittels zweiten Absperrmitteln absperrbar ist, und ein oder mehrere wartungsbedürftige Bauteile, die auf dem Strömungsweg zwischen den ersten und den zweiten Absperrmitteln angeordnet sind, enthaltend ein erstes, fest in die Rohrleitung integriertes Armaturenteil, in dem die ersten und zweiten Absperrmittel vorgesehen sind, und bei dem zwischen den ersten und zweiten Abspemnitteln zwei Anschlüsse vorgesehen sind, über welche ein zweites Armaturenteil lösbar angeschlossen ist, wobei das wartungsbedürftige Bauteil zusammen mit dem lösbaren zweiten Armaturenteil von dem ersten Armaturenteil abtrennbar ist gemäß Oberbegriff des Anspruchs 1.

Solche wartungsbedürftigen Bauteile können insbesondere Filter, Rückflußverhinderer, Rohrtrenner, Druckminderer oder sonstige Ventile sein, wie sie in Wasserarmaturen in verschiedenen Ausführungen und Anordnungen für unterschiedliche Zwecke verwendet werden. Ein Beispiel für eine solche Wasserarmatur sind Rohrtrenner-Armaturen.

### Stand der Technik

Ein Rohrtrenner dient zum Trennen des Trinkwassersystems von einem Brauchwassersystems. Das Brauchwassersystem kann beispielsweise ein Heizungssystem sein. Ein solches Heizungssystem wird aus einem Trinkwassersystem, der Trinkwasserleitung, gefüllt oder nachgefüllt. Es muß unter allen Umständen verhindert werden, daß etwa bei einem Druckabfall im Trinkwassersystem Wasser aus dem Brauchwassersystem in das Trinkwassersystem zurückfließt. Zu diesem Zweck sind Rückflußverhinderer vorgesehen. Das sind federbelastete Rückschlagventile, die unter dem Einfluß des Trinkwasserdrucks nur in Richtung vom Trinkwassersystem zum Brauchwassersystem hin öffnen. Für den Dauerbetrieb wird jedoch auch dies nicht als ausreichend angesehen. Vielmehr ist nach Abschluß des Füll- oder Nachfüllvorganges eine physische Trennung zwischen Trinkwassersystem und Brauchwassersystem vorgeschrieben, beispielsweise durch Füllen oder Nachfüllen über einen Schlauch, der nach Abschluß des Füll- oder Nachfüllvorganges entfernt wird. Dadurch wird sichergestellt, daß auch über undichte Absperrventile oder Rückflußverhinderer kein Brauchwasser in das Trinkwassersystem gelangen kann.

Da das Entfernen des Schlauchs nach dem Füll- oder Nachfüllvorgang lästig ist und auch nicht kontrolliert werden kann, sind feste Installationen von "Rohrtrennern" bekannt (beispielsweise EP 0 972 995 A1). Diese bekannten Rohrtrenner enthalten einen stromaufwärtigen, d.h. auf der Seite des Trinkwassersystems angeordneten, und einen stromabwärtigen, d.h. auf der Seite des Brauchwassersystems angeordneten Rückflußverhinderer. Beide Rückflußverhinderer öffnen in Richtung auf das Brauchwassersystem hin. Zwischen den Rückflussverhinderern ist ein druckgesteuertes Entlastungsventil angeordnet. Dieses Entlastungsventil ist von dem Trinkwasserdruck gesteuert und öffnet automatisch, wenn der Trinkwasserdruck wegfällt oder absinkt. Wenn somit das Brauchwassersystem aus dem Trinkwassersystem gefüllt oder nachgefüllt wird und ein dafür ausreichender Trinkwasserdruck vorhanden ist, dann wird das Entlastungsventil von diesem Druck geschlossen. Es fließt Trinkwasser über die von dem Trinkwasserdruck aufgedrückten Rückflußverhinderer in das Brauchwassersystem.

Wenn aber der Trinkwasserdruck unter ein vorgegebenes Maß absinkt, sei es, weil ein Absperrventil das Trinkwassersystem absperrt, sei es weil der Trinkwasserdruck aus irgendeinem Grund zusammenbricht, öffnet das Entlastungsventil. Selbst wenn dann über einen lecken Rückflußverhinderer Brauchwasser aus dem Brauchwassersystem zurückfließt, fließt dieses zurückfließende Brauchwasser über den Ablauf ab und kann auf keinen Fall in das Trinkwassersystem gelangen.

Durch die Firmendruckschrift "SYR Füllgruppe Typ 2128" der Hans Sasserath & Co. KG ist eine Füllgruppe bekannt, die an dem Brauchwassersystem, z.B. einer geschlossenen Heizungsanlage, fest installiert ist und einen Anschluß für einen Schlauch aufweist. Über den so anzuschließenden Schlauch wird die Füllgruppe mit einem Trinkwassersystem verbunden. Die Füllgruppe enthält ein Absperrventil und einen Druckminderer.

In der DE 103 08 838.5 ist eine Rohrtrenner-Anordnung beschrieben, in der ein Rückflußverhinderer zusammen mit einem Entlastungsventil als Ganzes in einer Baugruppe aus einem Rohrtrennergehäuse herausziehbar sind.

Die bekannten Armaturen sind fest in die Rohrleitung integriert. Zu Wartungszwecken müssen Absperrhähne geschlossen und die Armatur aus der Rohrleitung ausgebaut werden. Dies ist aufwändig.

Aus der Firmendruckschrift GEOH-1353GE23 R0205 der Firma Honeywell GmbH, D-74821 Mosbach (www.honeywell.de/haustechnik) ist unter der Bezeichnung MAG160S eine Anschlußkombination zur Verbindung einer Sicherheitsgruppe und eines Membran-Druckausdehnungsgefäßes bekannt. Die Anschlußkombination ist einteilig ausgebildet. Das Ausdehnungsgefäß ist unmittelbar an der Anschlußkombination vorgesehen. In der Rohrleitung stromaufwärts zu der Anschlußkombination kann ein separater Druckminderer vorgesehen werden. Wenn der Druckminderer gewartet wird, muß dieser aus der Installation ausgebaut werden. Eine Installation mit und ohne Druckminderer hat unterschiedliche Baumaße. Dementsprechend muß die Installation bei Veränderung der Anforderungen an die Sicherheitsgruppe umgebaut werden. Dies ist aufwändig.

Die US 6 513 543 B1 offenbart eine Rohrtrennerarmatur gemäß dem Oberbegriff des Anspruchs 1. Die Rohrtrennerarmatur umfasst zwei in eine Rohrleitung eingebaute Kugelhähne. Koaxial zur Rohrleitung ist zwischen den Kugelhähnen eine Rohrtrenneranordnung mit zwei Rückflussverhinderern angeordnet. Die Anordnung ist modular aufgebaut, wobei der Armaturenteil mit den Rückflussverhinderern als ganzes aus der Rohrleitung herausnehmbar ist.

### Offenbarung der Erfindung

Es ist Aufgabe der Erfindung, eine Rohrtrenneranordnung der eingangs genannten Art zu schaffen, die kompakter ist, leichter auszutauschen und zu warten ist und bei der die Lagerhaltung einfacher ist.

Erfindungsgemäß wird die Aufgabe gelöst durch eine Rohrtrenneranordnung mit den kennzeichnenden Merkmalen des Anspruchs 1, wobei die Anschlüsse zum Anschließen des zweiten Armaturenteils von zwei parallelen Anschlußstutzen gebildet sind und der Flüssigkeitseinlass und der Flüssigkeitsauslass miteinander fluchten, wodurch eine Armaturen-Längsachse definiert ist, und die Achsen der Anschlußstutzen senkrecht zu der Längsachse verlaufen, wobei zum Anschließen der Flüssigkeitsarmatur in eine Rohrleitung ein Anschlußstück als erstes Armaturenteil vorgesehen ist, das mit einem Einlaß- und einem Auslaßstutzen in die Rohrleitung eingebaut ist, dem Einlaßstutzen ein Absperrventil nachgeschaltet ist und stromab von diesem Absperrventil ein Anschlußstutzen vorgesehen ist, der mit dem Einlaß des Armaturengehäuses fluchtend verbindbar ist, der Auslaßstutzen des Anschlußstücks mit einem Anschlußstutzen verbunden ist, der fluchtend mit dem Auslaß des ersten Armaturenteils verbindbar ist, und der Einlassstutzen des ersten Anschlussstücks mit dem Absperrventil und nachgeschaltetem Anschlußstutzen einerseits und der Auslassstutzen mit dem damit verbundenen Anschlußstutzen andererseits durch ein nicht-strömungsführendes Abstandsstück verbunden sind.

Die Rohrtrenneranordnung ist also als zweiteilige Armatur ausgebildet. Durch einfaches Betätigen der Absperrmittel kann der zweite Armaturenteil abgenommen und gewartet oder ausgetauscht werden. Das hat den Vorteil, daß die Installation der Rohrleitung immer die gleiche ist. Die Installation in der Rohrleitung braucht bei Ein- und Ausbau nicht aufgebrochen werden. Auch das Baumaß bleibt das gleiche, unabhängig davon, ob z.B. eine Armatur mit oder ohne Druckminderer eingesetzt wird.

Besonders vorteilhaft ist es, daß die Funktionalität der Armatur geändert werden kann, ohne daß die Installation geändert werden muß. So kann eine einfache Armatur durch eine komplexere Armatur mit mehr Funktionalitäten, z.B. zusätzlichen Druckminderer, Filter, Ausdehnungsgefäß oder dergleichen ersetzt werden. Dies vereinfacht auch die Lagerhaltung. Statt für jeden Druck und jede Funktionalität ein eigenes Gerät vorzusehen, reicht es z.B. bei einer Sicherheitsgruppe aus, ein für alle Funktionalitäten gemeinsames Anschlußteil vorzusehen und ein geeignetes zweites Armaturenteil für jede Funktionalität. Diese sind kleiner und kostengünstiger, so daß sich die Lagerhaltung vereinfacht. Der Sicherheitsventilblock bleibt immer der gleiche.

Die Rohrtrenneranordnung kann insgesamt auch kürzer ausgestaltet werden. Durch die Modulbauweise entsteht ein ausbaufähiger Baukasten. Die Absperrmittel werden von allen Bauteilen, z.B. Druckminderer, Ausdehnungsgefäß, Rückflußverhinderer etc. gemeinsam genutzt. Die Armatur kommt daher mit besonders wenigen Komponenten aus.

Die Anschlüsse zum Anschließen des zweiten Armaturenteils sind von zwei parallelen Anschlußstutzen gebildet. Dadurch lässt sich das zweite Armaturenteil mit korrespondierenden Stutzen oder Anschlüssen direkt, z.B. durch Aufstecken und Anschrauben mit dem ersten Armaturenteil verbinden.

Der Flüssigkeitseinlass und der Flüssigkeitsauslass fluchten miteinander, wodurch eine Armaturen-Längsachse definiert ist. Die Achsen der Anschlußstutzen verlaufen senkrecht zu der Längsachse. Dann kann die Armatur ohne zusätzliche Adapter in eine gerade verlaufende Rohrleitung eingebaut werden. Die Anschlußstutzen verlaufen senkrecht von der Rohrleitung weg, so daß der Einbau auch direkt an einer Wand möglich ist.

In einer Ausgestaltung der Erfindung sind die Absperrmittel von Kugelhähnen gebildet. Die Kugelhähne können derart angeordnet sein, daß der Flüssigkeitseinlass und Flüssigkeitsauslass einerseits und die zugehörigen Anschlüsse andererseits absperrbar sind und die Flüssigkeit bei geöffnetem Kugelhahn unter einem Winkel durch den Kugelhahn von dem Flüssigkeitseinlass zum ersten Anschluß bzw. vom zweiten Anschluß unter einem Winkel durch den Kugelhahn zum Flüssigkeitsauslaß fließt. Der Kugelhahn sperrt also sowohl den Ein- bzw. Auslass, als auch den Anschluß.

An dem zweiten Armaturenteil der Flüssigkeitsarmatur kann ein Druckminderer vorgesehen sein. Dies ist insbesondere dann sinnvoll, wenn Bauteile, z.B. ein Ausdehnungsgefäß, verwendet werden, die mit einem konstanten Druck eine höhere Leistungsfähigkeit haben oder wenn ansonsten kein Druckminderer in der Installation vorgesehen ist.

Weiterhin kann ein Schmutzfänger oder Filter an dem zweiten Armaturenteil vorgesehen sein. Diese lassen sich gut mit dem zweiten Armaturenteil ausbauen und können dann leicht gereinigt, ersetzt oder gewartet werden. Es kann ferner ein oder mehrere Rückflußverhinderer an dem zweiten Armaturenteil vorgesehen sein. Solche Rückflußverhinderer benötigen zu Prüfzwecken Absperrventile. Weiterhin sind die Rückflußverhinderer gut zur vorgeschriebenen Wartung und Prüfung zugänglich.

Zum Anschließen des Armaturengehäuses in eine Rohrleitung werden einlass- und auslassseitig in die Rohrleitung Anschlußmittel eingebaut, welche jeweils einen mit dem Flüssigkeitseinlaß bzw. dem Flüssigkeitsauslaß des Armaturengehäuses fluchtenden, mit der Achse der Rohrleitung einen Winkel einschließende Anschlußstutzen aufweisen. Das Armaturengehäuse ist dann seitlich von der Rohrleitung angeordnet.

Das geschieht in der Weise, daß zum Anschließen des Armaturengehäuses in die Rohrleitung als Anschlußmittel ein Anschlußstück vorgesehen ist, das mit einem Einlaß- und einem Auslaßstutzen in die Rohrleitung eingebaut ist. In dem Anschlußstück ist dem Einlaßstutzen ein Absperrventil nachgeschaltet. Stromab von diesem Absperrventil ist ein Anschlußstutzen vorgesehen, der mit dem Einlaß des Armaturengehäuses fluchtend verbindbar ist. Der Auslaßstutzen des Anschlußstücks ist mit einen Anschlußstutzen verbunden, der fluchtend mit dem Auslaß des Armaturengehäuses verbindbar ist. Der Einlaßstutzen des Anschlußstücks ist mit dem Absperrventil und nachgeschaltetem Anschlußstutzen einerseits und der Auslaßstutzen mit dem damit verbundenen Anschlußstutzen andererseits durch ein nicht-strömungsführendes Abstandsstück verbunden.

Dabei kann das Armaturengehäuse von langgestreckt-prismatischer Grundform sein und eine Längsachse definieren. Flüssigkeitseinlaß und Flüssigkeitsauslaß können von Anschlußstutzen gebildet sein, deren Achsen senkrecht zu der Längsachse verlaufen.

In einem neben der Rohrleitung angeordneten Armaturengehäuse des Rohrtrenners, kann der Rohrtrenner in Richtung parallel zu der Rohrleitung und ggf. von beiden Seiten her zugänglich sein. Es ist nicht nötig, eine Bohrung zur Aufnahme der Rohrtrenners wie bei der DE 103 08 838 A1 unter einem Winkel zur Achse der Rohrleitung anzuordnen, wobei der Rohrtrenner auch nur von einer Seite her zugänglich ist.

Ausgestaltungen der Erfindung sind Gegenstand der Unteransprüche. Ausführungsbeispiele sind nachstehend unter Bezugnahme auf die beigefügten Zeichnungen näher erläutert.

### Kurze Beschreibung der Zeichnungen

- Fig.1: ist eine perspektivische Darstellung einer Rohrtrenneranordnung nach einem ersten Ausführungsbeispiel mit einem den Rohrtrenner und einen Druckminderer enthaltenen Armaturengehäuse und einem in die Rohrleitung eingebauten Anschlußstück, wobei die Achse des im wesentlichen zylindrischen Armaturengehäuses im Abstand parallel zu der Achse der Rohrleitung verläuft.
- Fig.2: zeigt einen Vertikalschnitt durch das Armaturengehäuse und Anschlußstück aus Fig.1.
- Fig.3: zeigt einen Vertikalschnitt durch eine Rohrtrenneranordnung mit Anschlußstück und nachgeschalteten Druckminderer nach einem zweiten Ausführungsbeispiel.

### Beschreibung der Ausführungsbeispiele

### Ausführungsbeispiel 1 : Rohrtrenner-Anordnung

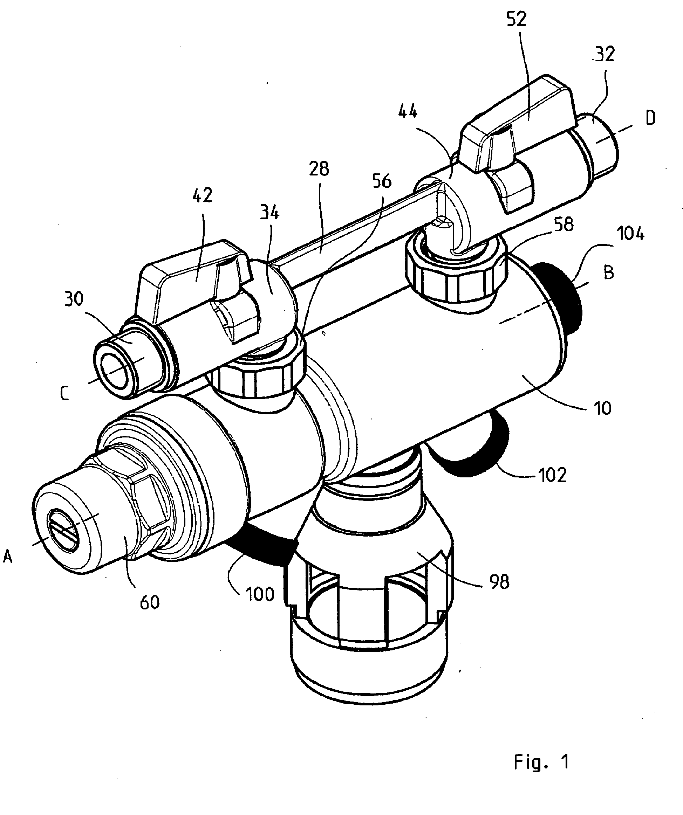

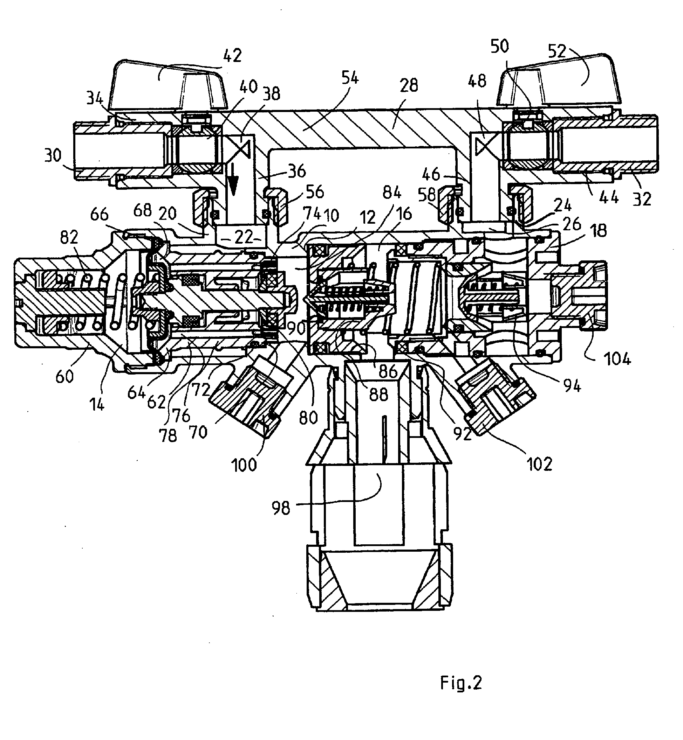

In den Figuren 1 und 2 ist mit 10 ein Armaturengehäuse von zylindrischer Grundform bezeichnet. Wie aus Fig.2 ersichtlich ist, ist das Armaturengehäuse hülsenförmig und bildet eine Schulter 12. In das Armaturengehäuse 10 ist von links in Fig.2 her ein Druckminderer 14 eingeschraubt. Der Druckminderer schließt die Bohrung des Armaturengehäuses links in Fig.2 ab. Der Druckminderer ist als zusammenhängender, patronenartig aus dem Armaturengehäuse 10 herausschraubbarer Bauteil ausgebildet. Vor rechts in Fig.2 ist in das Armaturengehäuse ein Rohrtrenner eingesetzt, der generell mit 16 bezeichnet ist. Der Rohrtrenner 16 weist einen Trägerteil 18 auf, der die Bohrung des Armaturengehäuses rechts in Fig.2 abschließt.

Das Armaturengehäuse 10 weist einen einlaßseitigen Anschlußstutzen 20 auf, der einen Einlaßanschluß 22 bildet, und einen auslaßseitigen Anschlußstutzen 24, der einen Auslaßanschluß 26 bildet. Die Anschlußstutzen 20 und 24 sind seitlich an dem Armaturengehäuse 10 in der Nähe von dessen einlaßseitigem bzw. auslaßseitigem Ende angeordnet. Sie sind zueinander parallel und sitzen auf der gleichen Seite des Armaturengehäuses. Das zylindrische Armaturengehäuse 10 definiert eine Längsachse. Die Achsen der Anschlußstutzen 20 und 24 verlaufen senkrecht zu dieser Längsachse und liegen in einer Ebene, der Darstellungsebene von Fig.2.

Das Armaturengehäuse mit Druckminderer 14 und Rohrtrenner 16 ist mittels eines Anschlußstücks 28 in eine (nicht dargestellte) Rohrleitung eingebaut. Das Anschlußstück 28 weist einen Einlaßstutzen 30 und einen damit fluchtenden Auslaßstutzen 32 auf. Der Einlaßstutzen 30 sitzt in einem einlaßseitigen Endteil 34 des Anschlußstücks 28. An dem Endteil sitzt ein Anschlußstutzen 36, dessen Achse senkrecht zur Achse der Rohrleitung und der Einlaß- und Auslaßstutzen verläuft. Der Einlaßstutzen 30, das Endteil 34 und der Anschlußstutzen 36 bilden einen L-förmigen Einlaßkanal 38. In dem Einlaßkanal sitzt stromab oder auslaßseitig von dem Einlaßstutzen 30 ein Absperrventil 40 in Form eines Kugelventils, das mittels eines Handgriffs 42 betätigbar ist. Der Auslaßstutzen 32 sitzt in einem auslaßseitigen Endteil 44 des Anschlußstücks 28. An dem auslaßseitigen Endteil 44 sitzt ein Anschlußstutzen 46, dessen Achse ebenfalls senkrecht zur Achse der Rohrleitung und der Einlaß- und Auslaßstutzen und parallel zur Achse des Anschlußstutzens 36 verläuft. Der Auslaßstutzen 32, das Endteil 44 und der Anschlußstutzen 46 bilden einen L-förmigen Auslaßkanal 48. In dem Auslaßkanal 48 sitzt stromauf oder einlaßseitig von dem Anschlußstutzen 48 ein Absperrventil 50 in Form eines Kugelventils, das mittels eines Handgriffs 52 betätigbar ist. Die einlaß- und auslaßseitigen Endteile 34 bzw. 44 mit den Einlaß- bzw. Auslaßstutzen 30 bzw. 32 sind durch ein integrales Abstandsstück 54 in definierter Lage miteinander verbunden. Dieses Abstandsstück führt keine Strömung sondern legt nur die gegenseitige Lage der Endteile 34 und 44 fest. Der Abstand der Anschlußstutzen 36 und 46 des Anschlußstücks 28 ist gleich dem Abstand der Anschlußstutzen 20 und 24 des Armaturengehäuses 10. Das Armaturengehäuse 10 kann daher mit seinen Anschlußstutzen 20 und 24 an die Anschlußstutzen 36 bzw. 46 des Anschlußstücks 26 angeschlossen werden. Das geschieht mittel Exzenterverschraubungen 56 bzw. 58, wie sie in der DE 298 19 933.5 U beschrieben sind. Die Anschlußstutzen 36 und 46 sind gleich lang, so daß ihre Enden in einer Ebene liegen. Ebenso liegen die Enden der Anschlußstutzen 20 und 24 in einer Ebene. Im montierten Zustand verläuft daher, wie aus den Figuren ersichtlich ist, die Längsachse des Armaturengehäuses 10 im Abstand parallel zu der Achse der Rohrleitung und der Einlaß- und Auslaßstutzen 30 bzw. 32 des Anschlußstücks 28.

Dadurch ist eine leichte Montage und Demontage des Armaturengehäuses möglich. Die Anordnung und insbesondere das Armaturengehäuse 10 ist einfach und raumsparend. Das Armaturengehäuse 10 kann nach Absperren der Absperrventile 40 und 50 leicht ausgebaut, ausgetauscht oder geöffnet werden. Der Druckminderer 14 ist von einer Seite und der Rohrtrenner 16 von der anderen Seite des Armaturengehäuses her zugänglich. Das Armaturengehäuse 10 kann wahlweise in der dargestellten oder in einer um 180° um die vertikale Achse in Fig.2 winkelversetzt eingebaut werden und damit der Strömungsrichtung in der Rohrleitung angepaßt werden.

Der Druckminderer 14 und der Rohrtrenner 16 sind im Wesentlichen in bekannter Weise aufgebaut und daher nur kurz beschrieben.

Der Druckminderer 14 ist als zusammenhängende Baugruppe ausgebildet, die patronenartig in das in Fig.2 linke, offene Ende des hülsenartigen Armaturengehäuses 10 eingeschraubt ist. Der Druckminderer 14 weist ein kappenartiges Oberteil 60 und ein Unterteil 62 auf. Das Unterteil 62 bildet einen schalenförmigen Teil 64. Zwischen dem Teil 64 und dem Oberteil 60 ist eine Membran 66 eingespannt. Zwischen dem schalenförmigen Teil 64 und der Membran 66 ist eine Druckkammer 68 gebildet. Das Unterteil weist weiterhin einen hülsenförmigen Ventilsitzkörper 70 auf. Der Ventilsitzkörper 70 ist mittels eines Dichtringes 72 abdichtend in dem Armaturengehäuse geführt. Der Ventilsitzkörper 70 bildet einen Ventilsitz 74 des Regelventils. Der Ventilsitzkörper 70 ist durch Stege 76 mit dem schalenförmigen Teil 74 verbunden. In den Stegen 76 verlaufen Kanäle 78, welche den geregelten Druck auf die Druckkammer 68 übertragen. Die Membran 66 ist über einen Stößel mit einem Ventilteller 80 verbunden. In dem kappenartigen Oberteil 60 sitzt eine Schraubenfeder 82. Die Schraubenfeder 82 belastet die Membran von links in Fig.2 und stützt sich an der Stirnfläche der Kappe 60 ab.

An der Membran 66 wirkt der Druck in der Kammer 84 stromab von dem Druckminderer 14 der Vorspannung der Schraubenfeder 82 entgegen. Bei Anstieg des Druckes in der Kammer 84 über den Sollwert bewegt die Membran den Ventilteller nach links in Fig.2 und drosselt den Wasserdurchfluß, so daß der Druck in der Kammer 84 sinkt. Bei Überschreiten eines bestimmten Druckes in der Kammer 84 schließt das Regelventil vollständig, und zwar unabhängig vom Einlaßdruck. Das gibt eine zusätzliche Sicherheit gegen den Rückfluß von Flüssigkeit, z.B. von Brauchwasser, vom Auslaß 26 zum Einlaß 22.

Der Rohrtrenner 16 weist einen hülsenförmigen Ventilkörper 86 auf. Der Ventilkörper 86 ist in der Bohrung des Armaturengehäuses 10 geführt und liegt in der Ruhestellung an der Schulter 12 an. In dem Ventilkörper 86 sitzt ein erster, stromaufwärtiger Rückflußverhinderer 88, dessen Schließkörper mit einem Ventilsitz 90 des Ventilkörpers 86 zusammenwirkt und der zur Auslaßseite hin öffnet. Ein Trägerteil 18 sitzt abgedichtet in dem rechten, offenen Ende des Armaturengehäuses 10 und schließt dessen Innenraum am rechten Ende in Fig.2 ab. Das Trägerteil 18 bildet einen Ventilsitz 92 in Form eines Dichtringes. Mit diesem Ventilsitz wirkt der Ventilkörper 86 zusammen. Der Ventilkörper 86 steht unter dem Einfluß einer Druckfeder, welche sich an dem Trägerteil 18 abstützt und den Ventilkörper in der Ruhestellung in Anlage an der Schulter 12 hält. In dem Trägerteil 18 sitzt ein zweiter, stromabwärtiger Rückflußverhinderer 94, der mit einem im Trägerteil 18 sitzenden Ventilsitz zusammenwirkt und ebenfalls zur Auslaßseite hin öffnet. Der Raum 96 zwischen den Rückflussverhinderern 88 und 94 ist mit einem Ablauf 98 verbunden.

Im Ruhezustand ist das von dem Ventilkörper 86 und dem Ventilsitz 92 gebildete Entlastungsventil offen. Dann kann auch bei einem Defekt des stromabwärtigen Rückflussverhinderers 94 kein Brauchwasser o. dergl. in das einlaßseitige System, z.B. Leitungswassersystem, gelangen. Solches Brauchwasser würde über den Ablauf 98 abfließen. Wenn am Einlaß 22 ein hinreichend großer Druck auftritt, wird der Ventilkörper 86 von diesem Druck gegen die Wirkung der Feder nach rechts in Fig.2 in seine Schließstellung bewegt und legt sich an den Ventilsitz 92 an. Das Entlastungsventil ist dann geschlossen. Bei weiterem Druckanstieg öffnen die Rückflußverhinderer 88 und 94, so daß eine Flüssigkeitsströmung vom Einlaß 22 zum Auslaß 26 stattfinden kann.

Ein verschließbarer Prüfanschluß 100 ist mit dem Raum zwischen dem Druckminderer 14 und dem Rohrtrenner 16 verbunden. Ein weiterer verschließbarer Prüfanschluß 102 steht mit dem Mitteldruckraum zwischen den Rückflussverhinderern 88 und 94 in Verbindung. Die beiden Prüfanschlüsse 100 und 102 sind an dem Armaturengehäuse 10 unter einem Winkel beiderseits des Ablaufs 98 vorgesehen. Ein dritter Prüfanschluß 104 steht mit dem Auslaß 26 in Verbindung. Dieser Prüfanschluß 104 sitzt an der Stirnseite des Trägerteils 18.

Statt durch ein einheitliches Anschlußstück 28 könnte das Armaturengehäuse an Einlaß 22 und Auslaß 26 auch durch getrennte Anschlußmittel angeschlossen sein, die z.B. den Endstücken 34 bzw. 44 entsprechen.

### Ausführungsbeispiel 2: Rohrtrenner mit nachgeschaltetem Druckminderer

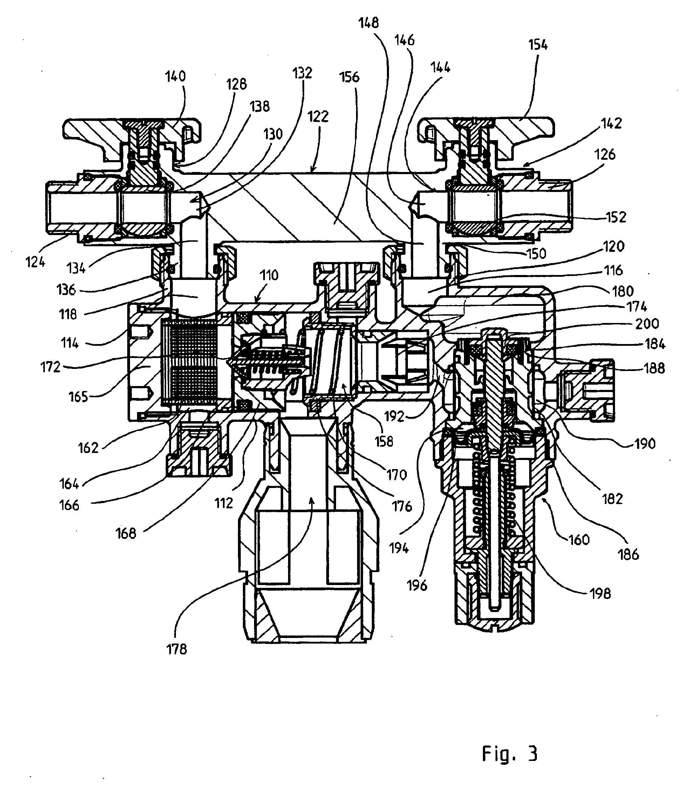

In Fig.3 ist mit 110 ist ein Armaturengehäuse bezeichnet. Das Armaturengehäuse 110 ist langgestreckt und bildet einen hülsenförmigen Mantelteil 112. An dem Armaturengehäuse 110 sind im Abstand voneinander ein Einlaß 114 und ein Auslaß 116 vorgesehen. Einlaß 114 und Auslaß 116 sind seitlich an dem Armaturengehäuse 110 vorgesehen und mit Anschlußstutzen 118 bzw. 120 verbunden. Die Anschlußstutzen 118 und 120 sind zueinander parallel. Die Achsen der Anschlußstutzen 118 und 120 verlaufen senkrecht zur Längsachse des Mantelteils 112 in der Papierebene der Figur. Die Anschlußstutzen 118 und 120 enden in einer gemeinsamen, zu der Papierebene der Figur senkrechten und zu der Längsachse parallelen Anschlußebene.

Zum Anschließen des Armaturengehäuses ist ein Anschlußstück 122 vorgesehen. Das Anschlußstück 122 weist einen Einlaßstutzen 124 und einen damit fluchtenden Auslaßstutzen 126 auf. Mit diesen Einlaß- und Auslaßstutzen 124 bzw. 126 ist das Anschlußstück 122 in eine (nicht dargestellte) Flüssigkeitsleitung eingebaut. Diese Flüssigkeitsleitung ist einlaßseitig mit einem Versorgungssystem, z.B. einem Trinkwassersystem, und auslaßseitig z.B. mit einem Warmwasser-Heizungssystem verbunden.

Der Einlaßstutzen 124 sitzt an einem einlaßseitigen Endteil 128. Das Endteil 128 bildet einen Einlaßkanal 130. Ein Abschnitt 132 des Einlaßkanals 130, der in dem Einlaßstutzen 124 endet, verläuft in Längsrichtung des Anschlußstücks 122. Von dem Abschnitt 132 geht senkrecht ein Abschnitt 134 ab. Der Abschnitt 134 endet in einem Anschlußstutzen 136. Der Anschlußstutzen 136 ist mit dem einlaßseitigen Anschlußstutzen 118 des Armaturengehäuses 110 verbunden. In dem einlaßseitigen Endteil 128 sitzt ein als Kugelventil ausgebildetes Absperrventil 138. Das Absperrventil 138 ist durch einen Drehgriff 140 betätigbar. Der Auslaßstutzen 126 sitzt an einem auslaßseitigen Endteil 142. Das Endteil 142 bildet einen Auslaßkanal 144. Ein Abschnitt 146 des Auslaßkanals 144, der in dem Auslaßstutzen 126 endet, verläuft in Längsrichtung des Anschlußstücks 122. Von dem Abschnitt 146 geht senkrecht ein Abschnitt 148 ab. Der Abschnitt 148 endet in einem Anschlußstutzen 150. Der Anschlußstutzen 150 ist mit dem auslaßseitigen Anschlußstutzen 120 des Armaturengehäuses 110 verbunden. In dem auslaßseitigen Endteil 142 sitzt ein als Kugelventil ausgebildetes Absperrventil 152. Das Absperrventil 152 ist durch einen Drehgriff 154 betätigbar. Die beiden Endteile 128 und 142 sind durch ein Abstandsstück 156 miteinander verbunden. Das Abstandsstück 156 ist so bemessen, daß die Anschlußstutzen 136 und 150 des Anschlußstücks 122 jeweils mit den Anschlußstutzen 118 bzw. 120 des Armaturengehäuses 110 fluchten.

In dem Armaturengehäuse 110 ist einlaßseitig, d.h. links in der Figur, ein Rohrtrenner vorgesehen, der generell mit 158 bezeichnet ist. Auslaßseitig, d.h. rechts in der Figur ist ein Druckminderer 160 angeordnet. Die Flüssigkeit strömt somit von dem Versorgungssystem über das einlaßseitige Endteil 128 durch den Rohrtrenner 158 und den Druckminderer 160 zum auslaßseitigen Endteil 142. Der Druckminderer 160 regelt damit unmittelbar den Ausgangsdruck und damit den Druck im stromabwärtigen System, z.B. einem Warmwasser-Heizungssystem.

Dabei ist einlaßseitig von dem Rohrtrenner 158 ein Schmutzfänger 162 angeordnet. Zu diesem Zweck ist das hülsenförmige Mantelteil 112 des Armaturengehäuses 110 an seinem einlaßseitigen Ende von einem Stopfen 165 abgeschlossen, der auf einer inneren Stirnfläche den zylindrischen Schmutzfänger 162 trägt. Das Armaturengehäuse 110 bildet vor dem Rohrtrenner 158 eine Einlaßkammer 164, die mit dem Einlaß 114 in Verbindung steht. Der auf der einen Seite durch die Stirnfläche des Stopfens 165 begrenzte zylindrische Schmutzfänger 162 ragt in die Einlaßkammer 164 hinein. Mit seinem freien Ende liegt der Schmutzfänger 162 an einer gehäusefesten Ringfläche 166 an, wobei die Flüssigkeitsströmung vom Einlaß 114 durch die Mantelfläche und die offene Stirnfläche des Schmutzfängers 162 hindurch zu dem Rohrtrenner 158 verläuft.

Der Rohrtrenner 158 ist ähnlich aufgebaut wie bei der Ausführung nach Fig.1 mit einem Ablaßventil 168, das von einer Feder 170 in Öffnungsrichtung vorbelastet ist, einem in dem Ventilschließkörper des Ablaßventils sitzenden stromaufwärtigen Rückflußverhinderer 172 und einem stromabwärtigen Rückflußverhinderer 174. Der Ventilschließkörper des Ablaßventils wirkt mit einem Ventilsitz 176 zusammen. Durch den Einlaßdruck wird das Ablaßventil 168 gegen die Wirkung der Feder 170 in seine Schließstellung gebracht. Dann öffnen die Rückflußverhinderer 172 und 174 in Richtung vom Einlaß 114 zum Auslaß 116 hin. Bei Absinken des Einlaßdrucks oder Anstieg des Mitteldrucks zwischen den Rückflussverhinderern 172 und 174 über den Einlaßdruck öffnet das Ablaßventil und stellt eine Verbindung zu einem Ablaß 178 her. Dadurch erfolgt automatisch eine physische Trennung des Warmwasser-Heizungssystems (o. dgl.) von dem Versorgungssystem.

Das Armaturengehäuse 110 bildet stromab von dem Rohrtrenner 158 eine Auslaßkammer 180, welche mit dem Auslaß 116 in Verbindung steht. Die Auslaßkammer 180 steht auf der dem Auslaß 116 abgewandten Seite mit einer in dem Armaturengehäuse 110 gebildeten Aufnahme 182 für den Druckminderer 160 in Verbindung. Der Druckminderer 160 ist als geschlossenes, patronenartig in die Aufnahme 182 eingesetztes Bauteil ausgebildet.

Der Aufbau des Druckminderers 160 ist konventionell und entspricht weitgehend dem Druckminderer bei der Ausführung nach Fig. 1 und 2.

Die Aufnahme 182 umfaßt eine an die Auslaßkammer 180 anschließende Trennwand 184 mit einem Durchbruch. Weiterhin umfaßt die Aufnahme 182 einen Aufnahmestutzen 186. In den Aufnahmestutzen 186 ist der Druckminderer 160 eingesetzt, wobei der Druckminderer 160 einerseits auf einer Schulter auf der Innenseite des Aufnahmestutzens 186 aufsitzt und andererseits mit einem integrierten Ventilsitz 188 abdichtend in dem Durchbruch der Trennwand 184 sitzt. Zwischen der Schulter und der Trennwand ist um den Druckminderer 160 herum ein Ringraum 190 gebildet, der mit dem Ausgang 192 des Rohrtrenners 158 in Verbindung steht. Der Druckminderer 160 bildet eine Steuerdruckkammer 194, die von einer Regelmembran 196 begrenzt ist. Die Steuerdruckkammer ist mit dem Auslaß 116 verbunden. Die Regelmembran ist von einer vorgespannten Feder 198 belastet. Die Regelmembran steuert einen Ventilteller 200, der mit dem Ventilsitz 188 zusammenwirkt und ein Regelventil bildet.

## Patentansprüche

1. Rohrtrenneranordnung zum Einbau in eine Flüssigkeitsleitung enthaltend einen Flüssigkeitseinlass (30), der mittels ersten Absperrmitteln (40) absperrbar ist, einen Flüssigkeitsauslass (32), der mittels zweiten Absperrmitteln (50) absperrbar ist, und ein oder mehrere wartungsbedürftige Bauteile (14, 16), die auf dem Strömungsweg zwischen den ersten und den zweiten Absperrmitteln angeordnet sind, enthaltend ein erstes, fest in die Rohrleitung integriertes Armaturenteil (28), in dem die ersten und zweiten Absperrmittel (40, 50) vorgesehen sind, und bei dem zwischen den ersten und zweiten Absperrmitteln zwei Anschlüsse (36, 46) vorgesehen sind, über welche ein zweites Armaturenteil (10) lösbar angeschlossen ist, wobei das wartungsbedürftige Bauteil (14, 16) zusammen mit dem lösbaren zweiten Armaturenteil von dem ersten Armaturenteil abtrennbar ist,
**dadurch gekennzeichnet, dass**
die Anschlüsse zum Anschließen des zweiten Armaturenteils (10) von zwei parallelen Anschlussstutzen (20, 24) gebildet sind und der Flüssigkeitseinlass (30) und der Flüssigkeitsauslass(32) miteinander fluchten, wodurch eine Armaturen-Längsachse definiert ist, und die Achsen der Anschlussstutzen (20, 24) senkrecht zu der Längsachse verlaufen, wobei
zum Anschließen der Flüssigkeitsarmatur (10) in eine Rohrleitung ein Anschlussstück (28) als erstes Armaturenteil vorgesehen ist, das mit einem Einlass- und einem Auslassstutzen (30, 32) in die Rohrleitung eingebaut ist,
dem Einlassstutzen (30) ein Absperrventil (40) nachgeschaltet ist und stromab von diesem Absperrventil (40) ein Anschlussstutzen (36) vorgesehen ist, der mit dem Einlass (22) des Armaturengehäuses (10) fluchtend verbindbar ist,
der Auslassstutzen (32) des Anschlussstücks (28) mit einem Anschlussstutzen (46) verbunden ist, der fluchtend mit dem Auslass (26) des ersten Armaturenteils (10) verbindbar ist, und
der Einlassstutzen (30) des ersten Anschlussstücks (28) mit dem Absperrventil (40) und nachgeschaltetem Anschlussstutzen (36) einerseits und der Auslassstutzen (32) mit dem damit verbundenen Anschlussstutzen (46) andererseits durch ein nicht-strömungsführendes Abstandsstück (54) verbunden sind.

2. Rohrtrenneranordnung nach Anspruch 1, **dadurch gekennzeichnet, dass** die Absperrmittel (40,50) von Kugelhähnen gebildet sind.

3. Rohrtrenneranordnung nach Anspruch 2, **dadurch gekennzeichnet, dass** die Kugelhähne derart angeordnet sind, dass der Flüssigkeitseinlass (30) und Flüssigkeitsauslass (32) einerseits und die zugehörigen Anschlüsse andererseits absperrbar sind und die Flüssigkeit bei geöffnetem Kugelhahn unter einem Winkel durch den Kugelhahn von dem Flüssigkeitseinlass (30) zum ersten Anschluss bzw. vom zweiten Anschluss unter einem Winkel durch den Kugelhahn zum Flüssigkeitsauslass (32) fließt.

4. Rohrtrenneranordnung nach einem der vorgehenden Ansprüche, **dadurch gekennzeichnet, dass** ein Druckminderer (14) an dem zweiten Armaturenteil vorgesehen ist.

5. Rohrtrenneranordnung nach einem der vorgehenden Ansprüche, **dadurch gekennzeichnet, dass** ein oder mehrere Rückflussverhinderer (88, 94) an dem zweiten Armaturenteil vorgesehen sind.

6. Rohrtrenneranordnung nach einem der vorgehenden Ansprüche, **dadurch gekennzeichnet, dass** die Verbindung der Anschlussstutzen mittels Muttern (56, 58) erfolgt, deren Innendurchmesser größer ist, als der Außendurchmesser der Anschlussstutzen und die Muttern (56, 58) bei verbundenen Stutzen exzentrisch zur Verbindungsachse angeordnet sind.

7. Rohrtrenneranordnung nach einem der vorgehenden Ansprüche, **dadurch gekennzeichnet, dass** nach Anschluss des zweiten Armaturenteils (10) an das erste Armaturenteil die Längsachse des zweiten Armaturenteils (10) im Abstand parallel zu der mit der Achse der Rohrleitung zusammenfallenden gemeinsamen Achse von Einlassstutzen (30) und Auslassstutzen (32) des ersten Armaturenteils (28) verläuft.

8. Rohrtrenneranordnung nach einem der vorgehenden Ansprüche 4 bis 7, **dadurch gekennzeichnet, dass** ein dem Druckminderer (14) nachgeschalteter Rohrtrenner (16) mit einem Ablassventil (86, 92), einem dem Ablassventil (86, 92) vorgeschalteten stromaufwärtigen und einem dem Ablassventil (86, 92) nachgeschalteten stromabwärtigen Rückflussverhinderer (88 bzw. 94) vorgesehen ist.

9. Rohrtrenneranordnung nach Anspruch 8, **dadurch gekennzeichnet, dass** drei verschließbare Prüfanschlüsse (100, 102, 104) in den Armaturenteilen vorgesehen sind, von denen einer mit dem Raum zwischen Druckminderer (14) und Rohrtrenner (16), ein zweiter mit dem Raum (96) zwischen Ablassventil (86, 92) und stromabwärtigem Rückflussverhinderer (94) und der dritte mit dem Raum stromab von dem stromabwärtigen Rückflussverhinderer (94) verbunden ist.

10. Rohrtrenneranordnung nach Anspruch 9, **dadurch gekennzeichnet, dass** der dritte Prüfanschluss (104) an der Stirnseite des zweiten Armaturenteils sitzt.

11. Rohrtrenneranordnung nach einem der vorgehenden Ansprüche 4 bis 10, **dadurch gekennzeichnet, dass** das zweite Armaturenteil einen hülsenförmigen Mantelteil aufweist, in welchen am einlassseitigen Ende der Druckminderer (14), der als patronenartiges Einsatzteil ausgebildet ist, abdichtend eingesetzt ist und welcher an dem auslassseitigen Ende durch ein abdichtend eingesetztes Trägerteil (18) des Rohrtrenners (16) abgeschlossen ist.

12. Rohrtrenneranordnung nach Anspruch 11, **dadurch gekennzeichnet, dass** der Druckminderer (14) und der Rohrtrenner (16) zu Wartungszwecken aus einer Bohrung des zweiten Armaturenteils (10) herausziehbar sind.

13. Rohrtrenneranordnung nach Anspruch 7, **dadurch gekennzeichnet, dass** der Rohrtrenner (158) in dem zweiten Armaturenteil (110) einlassseitig angeordnet ist und dem Rohrtrenner (158) auslassseitig ein Druckminderer (160) nachgeschaltet ist.

14. Rohrtrenneranordnung nach einem der vorgehenden Ansprüche, **dadurch gekennzeichnet, dass** das zweite Armaturenteil (110) einen hülsenartigen Mantelteil (112) aufweist, welcher an seinem einlassseitigen Ende von einem Stopfen (165) abgeschlossen ist, der auf einer inneren Stirnfläche den zylindrischen Schmutzfänger (162) trägt.

15. Rohrtrenneranordnung nach einem der vorgehenden Ansprüche 7 bis 14, **dadurch gekennzeichnet, dass** das Armaturenteil (110) vor dem Rohrtrenner (158) eine Einlasskammer (164) bildet, die mit dem Einlass (114) in Verbindung steht, und der auf der einen Seite durch die Stirnfläche des Stopfens (165) begrenzte zylindrische Schmutzfänger (162) in die Einlasskammer (164) hineinragt und mit seinem freien Ende an einer gehäusefesten Ringfläche (166) anliegt, wobei die Flüssigkeitsströmung vom Einlass (114) durch die Mantelfläche und die offene Stirnfläche des Schmutzfängers (162) hindurch zu dem Rohrtrenner (158) verläuft.

16. Rohrtrenneranordnung nach Anspruch 14 oder 15, **dadurch gekennzeichnet, dass**
(a) das zweite Armaturenteil (110) stromab von dem Rohrtrenner (158) eine Auslasskammer (180) bildet, welche mit dem Auslass (116) in Verbindung steht,
(b) die Auslasskammer (180) auf der dem Auslass (116) abgewandten Seite mit einer in dem zweiten Armaturenteil (110) gebildeten Aufnahme (182) für einen Druckminderer (160) in Verbindung steht und
(c) der Druckminderer (160) als geschlossenes, patronenartig in die Aufnahme (182) eingesetztes Bauteil ausgebildet ist.

## Claims

1. Pipe disconnector assembly for installation in a pipe for liquids comprising an inlet for liquids (30) which is adapted to be shut off by first shut-off means (40) and a liquid outlet (32) which is adapted to be shut off by second shut-off means (50) and one or more components (14, 16) requiring occasional servicing which are positioned between said first and second shut-off means comprising a first fitting part (28) which tightly incorporated in the pipe, provided with said first and said second shut-off means (40, 50) and wherein two connections (36, 46) are provided between said first and said second shut-off means having a second fitting part (10) removably attached thereto, wherein the component (14, 16) requiring occasional servicing is removable from the first fitting part together with the second fitting part,
**characterised in that**
the connections for connecting the second fitting part (10) are formed by two parallel connection sockets (20, 24) and the liquid inlet (30) and the liquid outlet (32) are in alignment, thereby defining a longitudinal fitting axis and the axes of the connection sockets (20, 24) extend perpendicular to the longitudinal axis, wherein
a connection piece (28) in the form of a first fitting part is provided for installing the fitting (10) in a pipe, the connection piece is adapted to be installed in the pipe with an inlet- and an outlet socket (30, 32),
a shut-off valve (40) is provided downstream of the inlet socket (30) and a connection socket (30) is provided downstream of the shut-off valve (40) in alignment with the inlet (22) of the fitting housing (10),
the outlet socket (32) of the connection piece (28) is connected to a connection socket (46) which is adapted to be connected to and in alignment with the outlet (26) of the first fitting part (10), and
the inlet socket (30) of the connection piece (28) with the shut-off valve (40) and the downstream connection socket (36) is connected by a non-flow guiding spacer (54) to the outlet socket (32) with the connection socket (46) connected thereto.

2. Pipe disconnector assembly according to claim 1, **characterized in that** the shut-off means (40, 50) are formed by ball valves.

3. Pipe disconnector assembly according to claim 2, **characterized in that** the ball valves are positioned in such a way, that the inlet (30) for the liquid and the outlet (32) for the liquid on one hand and the corresponding connection sockets on the other hand are adapted to be shut off and that with the ball valve in an opened position the liquid flows with an angle through the ball valve from the inlet (30) to the first connection and from the second connection with an angle through the ball valve to the outlet (32), respectively.

4. Pipe disconnector assembly according to any of the preceding claims, **characterized in that** a pressure reducer (14) is provided in the second fitting part.

5. Pipe disconnector assembly according to any of the preceding claims, **characterized in that** one or more backflow preventers (88, 94) are provided in the second fitting part.

6. Pipe disconnector assembly according to any of the preceding claims, **characterized in that** the connection of the connection sockets is effected by means of nuts (56, 58) with an inner diameter which is larger than the outer diameter of the connection sockets and the nuts are excentrically provided with respect to the connection axis when the parts are connected.

7. Pipe disconnector assembly according to any of the preceding claims, **characterized in that** the longitudinal axis of the second fitting part (10) extends parallel in a distance to the axis of the pipe corresponding to the common axis of the inlet socket (30) and the outlet socket (32) of the first fitting portion (28), when the second fitting portion (10) is installed.

8. Pipe disconnector assembly according to any of the preceding claims, **characterized in that** a pressure reducer (14) is provided and a pipe disconnector (16) with an outlet valve (86, 92) downstream thereof with an upstream backflow preventer (88) and a downstream backflow preventer (94) upstream and downstream of the outlet valve (86, 92) are provided.

9. Pipe disconnector assembly according to claim 8, **characterized in that** three test connections (100, 102, 104), which are adapted to be closed are provided in the fitting parts, one of said test connections being connected to the space between the pressure reducer (14) and the pipe disconnector (16), a second being connected to the space (96) between the outlet valve (86, 92) and the downstream backflow preventer (94) and the third being connected to the space upstream of the downstream backflow preventer (94).

10. Pipe disconnector assembly according to claim 9, **characterized in that** the third test connection (104) is positioned at the front side of the second fitting part.

11. Pipe disconnector assembly according to any of the preceding claims, **characterized in that** the second fitting part is provided with a sleeve-shaped jacket part, a pressure reducer (14) being inserted into the inlet-side end thereof, said pressure reducer being formed as a cartridge-like insert, which is tightly inserted and being closed at the outlet-side end by a tightly inserted carrier part (18) of the pipe disconnector (16).

12. Pipe disconnector assembly according to claim 11, **characterized in that** the pressure reducer (14) and the pipe disconnector (16) are adapted to be removed for servicing purposes by pulling out of a bore hole in the second fitting part (10).

13. Pipe disconnector assembly according to claim 7, **characterized in that** the pipe disconnector (158) in the second fitting part (110) is provided on the inlet-side and a pressure reducer (160) is provided downstream of the pipe disconnector (158).

14. Pipe disconnector assembly according to any of the preceding claims, **characterized in that** the second fitting part (110) is provided with a sleeve-like jacket part (112), which is closed by a plug (165) on the inlet-side end and which carries a cylindrical dirt trap (162) on an inner front surface.

15. Pipe disconnector assembly according to any of the preceding claims 7 to 14, **characterized in that** the fitting part (110) defines an inlet chamber (164) upstream of the pipe disconnector (158), said inlet chamber being connected to the inlet (114) and that the cylindrical dirt trap, limited on one side by the front surface of the plug (165) extends into the inlet chamber (164) and abuts with its free end an annular surface (166) which is stationary with respect to the casing, the liquid flow extending from the inlet (114) through the sleeve surface and the open end surface of the dirt trap (162) to the pipe disconnector (158).

16. Pipe disconnector assembly according to claim 14 or 15, **characterized in that**
(a) the second fitting part (110) defines an outlet chamber (180) downstream of the pipe disconnector (158) which is connected to the outlet (116),
(b) on the side opposite to the outlet (116) the outlet chamber (180) is connected to an accomodation cavity (182) for the pressure reducer (160) formed in the second fitting part (110) and
(c) the pressure reducer (160) is formed as an integrated, cartridge-like component inserted into the accomodation cavity (182).

## Revendications

1. Disposition de séparateur de système destinée à être installée dans une conduite de liquide, comprenant une admission de liquide (30) susceptible d'être fermée par des premiers moyens de fermeture (40), une sortie de liquide (32) susceptible d'être fermée par des seconds moyens de fermeture (50), et un ou plusieurs composants (14, 16) nécessitant de la maintenance disposés dans le courant entre les premiers et les seconds moyens de fermeture, comprenant un premier élément de robinetterie (28) intégré fixement dans la conduite et dans lequel sont prévus les premiers et seconds moyens de fermeture (40, 50) et pour lequel sont prévus, entre les premiers et seconds moyens de fermeture, deux raccords (36, 46) permettant de raccorder un second élément de robinetterie (10) de manière amovible, le composant (14, 16) nécessitant de la maintenance et le second élément de robinetterie amovible étant susceptibles d'être séparés du premier élément de robinetterie,
**caractérisée en ce que**
les raccords destinés à raccorder le second élément de robinetterie (10) sont formés de deux embouts de raccordement (20, 24) parallèles et l'admission de liquide (30) et la sortie de liquide (32) sont alignées l'une sur l'autre en définissant un axe longitudinal de robinetterie, et les axes des embouts de raccordement (20, 24) s'étendent perpendiculairement à l'axe longitudinal,
pour raccorder la robinetterie pour liquide (10) dans une conduite, il est prévu une pièce de raccordement (28) comme premier élément de robinetterie installé dans la conduite à l'aide d'un embout d'admission et d'un embout de sortie (30, 32),
une vanne de fermeture (40) est placée après l'embout d'admission (30) et il est prévu en aval de cette vanne de fermeture (40) un embout de raccordement (36) susceptible d'être connecté à l'admission (22) du boîtier de robinetterie (10) en s'alignant sur celle-ci,
l'embout de sortie (32) de la pièce de raccordement (28) est connecté à un embout de raccordement (46) susceptible d'être connecté à la sortie (26) du premier élément de robinetterie (10) en s'alignant sur celle-ci,
d'une part, l'embout d'admission (30) du premier élément de raccordement (28) avec la vanne de fermeture (40) et l'embout de raccordement (36) placé à la suite et, d'autre part, l'embout de sortie (32) avec l'embout de raccordement (46) connecté à celui-ci sont reliés par un écarteur (54) non conducteur de courant.

2. Disposition de séparateur de système selon la revendication 1, **caractérisée en ce que** les moyens de fermeture (40, 50) sont formés par des robinets à boisseau sphérique.

3. Disposition de séparateur de système selon la revendication 2, **caractérisée en ce que** les robinets à boisseau sphérique sont disposés de manière à ce que, d'une part, l'admission de liquide (30) et la sortie de liquide (32) et, d'autre part, les raccords associés sont susceptibles d'être fermés et, quand le robinet à boisseau sphérique est ouvert, le liquide traverse par rapport à un certain angle le robinet à boisseau sphérique de l'admission de liquide (30) vers le premier raccord et par rapport à un certain angle du second raccord vers la sortie de liquide (32).

4. Disposition de séparateur de système selon l'une quelconque des revendications précédentes, **caractérisée en ce qu'**un réducteur de pression (14) est prévu sur le second élément de robinetterie.

5. Disposition de séparateur de système selon l'une quelconque des revendications précédentes, **caractérisée en ce qu'**un ou plusieurs clapets antiretour (88, 94) sont prévus sur le second élément de robinetterie.

6. Disposition de séparateur de système selon l'une quelconque des revendications précédentes, **caractérisée en ce que** la connexion des embouts de raccordement s'effectue au moyen d'écrous (56, 58) dont le diamètre intérieur est supérieur au diamètre extérieur des embouts de raccordements et les écrous (56, 58) sont disposés de manière excentrée par rapport à l'axe de connexion lorsque les embouts sont connectés.

7. Disposition de séparateur de système selon l'une quelconque des revendications précédentes, **caractérisée en ce qu'**après le raccord du second élément de robinetterie (10) au premier élément de robinetterie, l'axe longitudinal du second élément de robinetterie (10) s'étend parallèlement à l'axe commun de l'embout d'admission (30) et de l'embout de sortie (32) du premier élément de robinetterie (28) coïncidant avec l'axe de la conduite en étant espacé de celui-ci.

8. Disposition de séparateur de système selon l'une quelconque des revendications précédentes, **caractérisée en ce qu'**il est prévu un séparateur de système (16) placé après le réducteur de pression (14) comportant une vanne de décharge (86, 92), des clapets antiretour (88 ou 94 respectivement), amont, placé avant la vanne de décharge (86, 92) et, aval, placé après la vanne de décharge (86, 92).

9. Disposition de séparateur de système selon la revendication 8, **caractérisée en ce que** trois raccords de contrôle (100, 102, 104), susceptibles d'être fermés, sont prévus dans les éléments de robinetterie, le premier étant connecté à l'espace situé entre le réducteur de pression (14) et le séparateur de système (16), le second à l'espace (96) situé entre la vanne de décharge (86, 92) et le clapet antiretour (94) aval et le troisième à l'espace situé en aval du clapet antiretour (94) aval.

10. Disposition de séparateur de système selon la revendication 9, **caractérisée en ce que** le troisième raccord de contrôle (104) se trouve sur la face frontale du second élément de robinetterie.

11. Disposition de séparateur de système selon l'une quelconque des revendications précédentes 4 à 10, **caractérisée en ce que** le second élément de robinetterie présente une partie d'enveloppe en forme de douille dans laquelle est inséré, de manière étanchante, à l'extrémité côté admission, le réducteur de pression (14) réalisé sous forme d'insert en cartouche, et qui est fermée, à l'extrémité côté évacuation, par un élément support (18) du séparateur de système (16), inséré de manière étanchante.

12. Disposition de séparateur de système selon la revendication 11, **caractérisée en ce que** le réducteur de pression (14) et le séparateur de système (16) peuvent être retirés d'un perçage du second élément de robinetterie (10) dans un but de maintenance.

13. Disposition de séparateur de système selon la revendication 7, **caractérisée en ce que** le séparateur de système (158) est disposé dans le second élément de robinetterie (110) du côté admission et un réducteur de pression (160) est placé après le séparateur de système (158) du côté sortie.

14. Disposition de séparateur de système selon l'une quelconque des revendications précédentes, **caractérisée en ce que** le second élément de robinetterie (110) présente une partie d'enveloppe (112) en forme de douille qui est fermée à son extrémité côté admission par un bouchon (165) portant un filtre (162) cylindrique sur une face frontale interne.

15. Disposition de séparateur de système selon l'une quelconque des revendications précédentes 7 à 14, **caractérisée en ce que** l'élément de robinetterie (110) forme devant le séparateur de système (158) une chambre d'admission (164) connectée à l'entrée (114), et le filtre (162) cylindrique délimité d'un côté par la face frontale du bouchon (165) émerge à l'intérieur de la chambre d'admission (164) et avec son extrémité libre est adjacente à une surface annulaire (166) fixe par rapport au boîtier, le liquide s'écoulant de l'admission (114) vers le séparateur de système (158) en traversant la partie d'enveloppe et la face frontale ouverte du filtre (162).

16. Disposition de séparateur de système selon la revendication 14 ou 15, **caractérisée en ce que**
(a) le second élément de robinetterie (110) forme en aval du séparateur de système (158) une chambre de sortie (180) connectée à la sortie (116)
(b) la chambre de sortie (180) est connectée sur le côté opposé à la sortie (116) à un logement (182) pour réducteur (160) formé dans le second élément de robinetterie (110) et
(c) le réducteur de pression (160) est configuré sous forme de composant fermé, inséré dans le logement (182) à la manière d'une cartouche.
